# EUROPÄISCHE PATENTSCHRIFT

(11) **EP 2 431 627 B1**
(45) Veröffentlichungstag und Bekanntmachung des Hinweises auf die Patenterteilung: **06.04.2016**
(21) Anmeldenummer: 11180789.7
(22) Anmeldetag: 09.09.2011
(51) Int. Cl.: F16D 65/00, F16J 3/04

(54) **Scheibenbremse mit einer Dichtungseinrichtung**
Disc brake with sealing
Frein à disque avec joint d'étanchéité

(30) Priorität: 16.09.2010 DE 102010045566
(43) Veröffentlichungstag der Anmeldung: 21.03.2012
(73) Patentinhaber: KNORR-BREMSE Systeme für Nutzfahrzeuge GmbH, 80809 München (DE)
(72) Erfinder: Asen, Alexander, 94474 Vilshofen (DE)
(74) Vertreter: Mattusch, Gundula

(56) Entgegenhaltungen:
- DE-A1-102008 063 890

## Beschreibung

Die Erfindung betrifft eine Scheibenbremse mit einer Dichtungseinrichtung nach dem Oberbegriff des Anspruchs 1. Eine solche Scheibenbremse ist z.B. aus der Druckschrift DE 10 2008 063 890 A1 schon bekannt. Scheibenbremsen sind in unterschiedlicher Bauweise bekannt, werden in einer Vielzahl von unterschiedlichen Fahrzeugen eingesetzt und haben sich bestens bewährt.

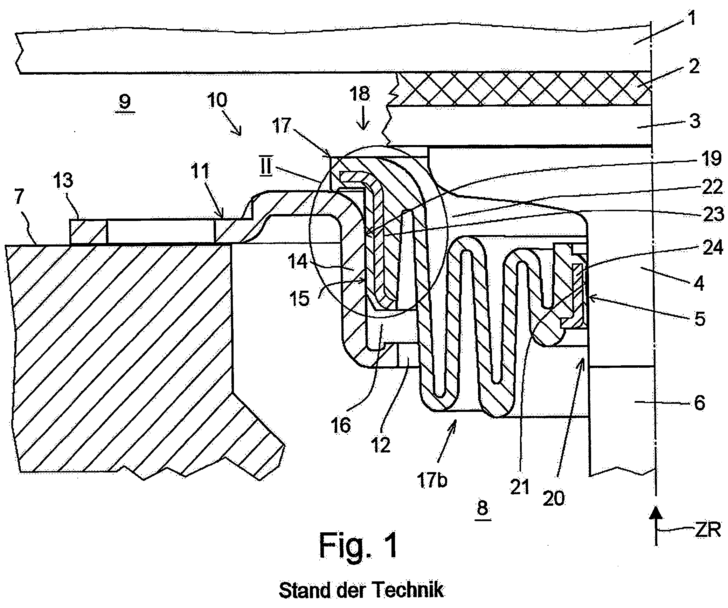

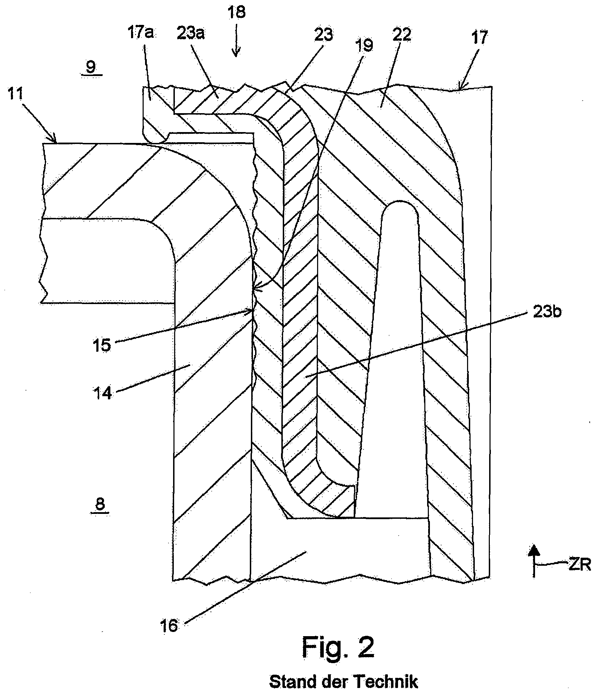

Fig. 1 zeigt eine schematische perspektivische Teilschnittansicht einer Schreibenbremse mit einer Dichtungseinrichtung 10 nach dem Stand der Technik, und Fig. 2 stellt dazu den Bereich II aus Fig. 1 in einer vergrößerten Ansicht dar.
Ein Bremsbelag 2, der auf einem Bremsbelagträger 3 aufgebracht ist, wird bei einem Bremsvorgang mittels einer nicht gezeigten Zuspanneinrichtung über eine Gewinderohreinheit 6 und ein Druckstück 4 in einer Zuspannrichtung ZR gegen eine Bremsscheibe 1 gedrückt, welche von einem nur angedeuteten Bremssattel 7 übergriffen ist. Ein gegenüberliegender Bremsbelag, der im Bremssattel gehalten ist, ist nicht dargestellt, aber vorstellbar. Dabei wird eine Bremskraft auf die Bremsscheibe übertragen und die Gewinderohreinheit 6 mit dem Druckstück 4 in Zuspannrichtung ZR auf die Bremsscheibe 1 zu bewegt. Zusätzlich wird die Gewinderohreinheit 6 bei zunehmendem Verschleiß von Bremsbelag 2 und Bremsscheibe 1 zur Sicherstellung eines konstanten Lüftspiels weiter in Zuspannrichtung ZR ausgefahren. Die Zuspanneinrichtung und die Gewinderohreinheit 6 sowie ein Teil des Druckstücks 4 befinden sich in einem Innenraum 8, welcher gegen einen Außenraum 9 gegen Eindringen von Feuchtigkeit, Flüssigkeit und Schmutz mittels einer Dichtungseinrichtung 10 geschützt ist. Die Dichtungseinrichtung 10 umfasst hier ein Bodenblech 11, das mit einem Befestigungsabschnitt 13 am Bremssattel 7 befestigt ist und eine Öffnung 11 aufweist, durch welche sich das Druckstück 4 hindurch erstreckt, und einen Faltenbalg 17, welcher eine Dichtung zwischen dem Bodenblech 11 und dem beweglichen Druckstück 4 bildet. Der Faltenbalg 17 besteht aus einem elastischen Material, z.B. Gummi o.dgl., und gleicht die Bewegungen des Druckstücks 4 aus, um die Dichtheit des Innenraums 8 zu gewährleisten. Dazu dichtet der Faltenbalg 17 zum Einen mit einem äußeren Dichtabschnitt 19 einen äußeren Übergangsabschnitt 18 zum Bodenblech 11, nämlich an einer Aufnahmewand 14 des Bodenblechs 11 in einer Aufnahme 16 mit einem Dichtabschnitt 15, ab. Zum Anderen ist der Faltenbalg 17 an einem Anschlussabschnitt 5 des Druckstücks 4 mit diesem, z.B. durch Verprägungen, stabil und mittels eines inneren Dicht- und Halteabschnitts 21 fixiert, wobei ein innerer Übergangsabschnitt 20 abgedichtet ist. Der Faltenbalg 17 weist einen Faltenbalgrand 17a und Falten 17b auf, wobei sein Körper mit dem Bezugszeichen 22 versehen ist. Im Bereich des äußeren Übergangsabschnitts 18 ist der Faltenbalg 17 innerhalb seines Körpers 22 mit einem äußeren Versteifungsring 23 versteift und im Bereich des inneren Übergangsabschnitts 20 mit einem inneren Versteifungsring 24 versehen. Der äußere Versteifungsring 23 ist an seinem zur Bremsscheibe 1 weisenden Ende korrespondierend zum Faltenbalgrand 17a mit einem Rand 23a versehen, wobei der Versteifungsring 23 eine Zylinderwand 23b aufweist, die im Wesentlichen koaxial zur (ebenfalls zylindrischen) Aufnahmewand 14 angeordnet ist. Die Zylinderwand 23 b ist an ihrem zum Innenraum 8 weisenden Ende zur Mitte hin um 90° mit Bildung eines kurzen Rands umgebogen. In dem äußeren Übergangsabschnitt 18 liegt eine reibschlüssige Fixierung des äußeren Dichtabschnitts 19 des Faltenbalgs 17 mit dem Dichtabschnitt 15 der Aufnahmewand 14 vor. Die Aufnahmewand 14 des Bodenblechs 11 ist zum Befestigungsabschnitt 13 um 90° angeordnet, wobei sie parallel zur Zuspannrichtung ZR verläuft. An ihrem zum Innenraum 8 weisenden unteren Ende geht sie um 90° in einen Abschnitt über, der parallel zum Befestigungsabschnitt 13 liegt und die Öffnung 12 aufweist. Die Aufnahmewand 14 ist hier umlaufend und bildet eine Zylinderwand um die Aufnahme 16. Zur Gewährleistung der Dichtheit dieses äußeren Dichtabschnitts 18 mit einer entsprechenden Sitzfestigkeit ist es erforderlich, dass die Toleranzen der Aufnahmewand 14 bzw. der zylindrischen Aufnahme 16 sehr eng sind und eingehalten werden müssen. Dadurch kann das System sehr empfindlich werden. Es könnte ein Herauswandern des Faltenbalgs 17 aus der Aufnahme 16 des Bodenblechs 11 auftreten und somit die Dichtwirkung der Dichtungseinrichtung 10 verringern.

Es ist daher die Aufgabe der vorliegenden Erfindung, eine Scheibenbremse mit einer verbesserten Dichtungseinrichtung zu schaffen.

Die Aufgabe wird durch eine Scheibenbremse mit den Merkmalen des Anspruchs 1 gelöst.

Eine Idee der Erfindung besteht darin, dass ein Faltenbalg der Dichtungseinrichtung mit einer umlaufenden äußeren Nut versehen ist, welche mit Vorsprüngen, die mit dem Bremssattel direkt oder indirekt verbunden sind, in Eingriff stehen und eine axiale Festlegung des Faltenbalgs bewirken.

Demgemäß weist eine Scheibenbremse mit einer Dichtungseinrichtung Folgendes auf: einen Bremssattel, welcher eine Bremsscheibe übergreift und in dem zwei Bremsbeläge zur Zusammenwirkung mit der Bremsscheibe bei Beaufschlagung mit einer Bremskraft durch eine Zuspanneinrichtung über mindestens ein mit einer Gewinderohreinheit verbundenes Druckstück angeordnet sind, wobei die Dichtungseinrichtung mindestens einen Faltenbalg aufweist, welcher mit dem Druckstück verbunden und an dem Bremssattel axial festgelegt ist. Die Scheibenbremse ist dadurch gekennzeichnet, dass der Faltenbalg einen äußeren Versteifungsring mit einer außen umlaufenden Nut aufweist, welche mit Vorsprüngen, die mit dem Bremssattel direkt oder indirekt verbunden sind, in Eingriff steht.

Der äußere Versteifungsring des Faltenbalgs kann bei seiner Herstellung z.B. durch einen Stanzbiegeprozess mit der Nut auf einfache Weise versehen werden, so dass keine zusätzlichen Bauteile notwendig sind. Ein Körper des Faltenbalgs, z.B. aus einem elastischen Kunststoff oder Gummi, kann dann um den äußeren Versteifungsring herum gespritzt werden.

Dieser äußere Versteifungsring kann aus Metall sein und wird so in den Körper des Faltenbalgs integriert, dass der Abschnitt dieses Metallrings, der die Nut aufweist, freiliegend angeordnet ist.

In einer bevorzugten Ausführung weist die Dichtungseinrichtung weiterhin ein Bodenblech auf, z. B. als Halterung, welches an dem Bremssattel befestigt ist und die Vorsprünge aufweist.

Die Vorsprünge, welche in einer Ausführung als Sicken in eine Aufnahmewand einer Aufnahme des Bodenblechs für den Faltenbalg eingestanzt werden können, greifen in die Nut des äußeren Versteifungsrings des Faltenbalgs ein und bewirken somit eine axiale Festlegung desselben. Dabei stehen Kanten der Sicken, die in die Aufnahme hineinragen, mit der Nut in Kontakt. Die Nut kann einen rechteckigen Querschnitt aufweisen, um einen solchen Kontakt zu verbessern.

In einer Alternative können die Vorsprünge als separate Teile an der zur Aufnahme weisenden Innenseite der Aufnahmewand oder an der Aufnahmewand durch Ausnehmungen der Aufnahmewand hindurchragend angebracht und mit Kanten ausgebildet sein, die in die Aufnahme hineinragen, wobei die Kanten mit der Nut des Faltenbalgs in Eingriff stehen.

Es ist vorgesehen, dass mindestens zwei, vorzugsweise vier, Vorsprünge an der Aufnahmewand angeordnet sind. Dies ist vorzugsweise in regelmäßigen Abständen, z.B. unter Winkeln von 90° möglich. Die Vorsprünge sind in einer Ausführung etwa 9 mm lang.

Die Aufnahmewand weist oberhalb der Vorsprünge zur Bremsscheibe weisend einen Dichtabschnitt zur Zusammenwirkung mit einem äußeren Dichtabschnitt des Faltenbalgs auf Damit wird eine Trennung von Dichtabschnitt und axialer Festlegung des Faltenbalgs bewirkt.

Der Faltenbalg weist eine verbesserte Sitzfestigkeit gegenüber dem Stand der Technik auf, da ein metallischer Eingriff zwischen Vorsprüngen und der Nut vorhanden ist, was durch den Kontakt der Kanten der Vorsprünge mit der Nut auf einfache Weise erreicht wird.

Das Bodenblech bzw. eine entsprechende Aufnahme für den Faltenbalg kann daher mit einem breiteren Toleranzfeld (Durchmesser und Rundheit) gefertigt werden, was Fertigungs-und Prüfkosten einspart.

Der Faltenbalg ist durch eine relativ einfache Modifikation mit nur geringen, einmaligen Werkzeugkosten mit der Nut herstellbar.

Auch im Servicefall kann eine Kompatibilität erhalten bleiben. Der Faltenbalg kann auch mit einer Aufnahme gepaart werden, welche keine Vorsprünge aufweist.

Beim Vorgang des Einsetzens des Faltenbalgs in die zugehörige Aufnahme gleitet der Rand des äußeren Versteifungsrings mit dem freiliegenden Abschnitt mit der Nut über die Vorsprünge, welche vorteilhafterweise in Einsetzrichtung in einem Winkel im Bereich von 5...30° angeschrägt sind, bis die Kanten in der Nut eingerastet sind. Es kann kein Material des Körpers des Faltenbalgs über den Vorsprüngen gestaucht werden. Somit wird auch keine Rückstellkraft durch gestauchtes Material bewirkt und somit ein Herauswandern des Faltenbalgs aus der Aufnahme verhindert.

Die Erfindung wird nun anhand eines Ausführungsbeispiels mit Bezug auf die beigefügten Zeichnungen näher erläutert. Hierbei zeigt:
- Fig. 1: eine schematische perspektivische Teilschnittansicht einer Scheibenbremse mit einer Dichtungseinrichtung nach dem Stand der Technik;
- Fig. 2: eine vergrößerte Darstellung des Bereichs II aus Fig. 1;
- Fig. 3: eine schematische perspektivische Schnittansicht einer erfindungsgemäßen Scheibenbremse mit einer Dichtungseinrichtung;
- Fig. 4: eine vergrößerte Darstellung des Bereichs IV aus Fig. 3;
- Fig. 5: eine Teilansicht eines Faltenbalgs der Dichtungseinrichtung nach Fig. 3 und 4; und
- Fig. 6: eine perspektivische Teildraufsicht eines Bodenblechs der Dichtungseinrichtung nach Fig. 3 und 4.

Fig. 1 und Fig. 2 sind bereits oben beschrieben worden, wobei im Folgenden auf die einzelnen Funktionsgruppen und -Teile Bezug genommen wird.

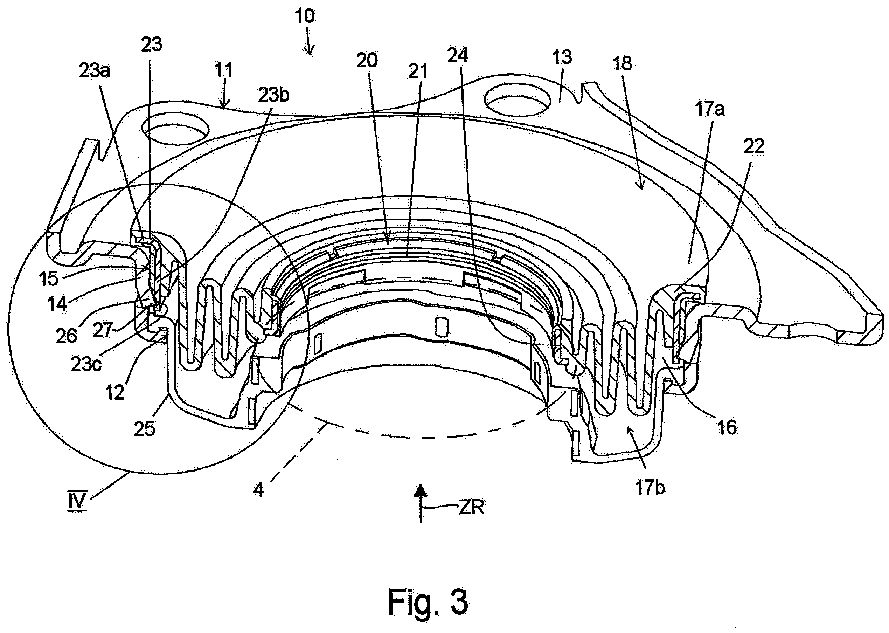

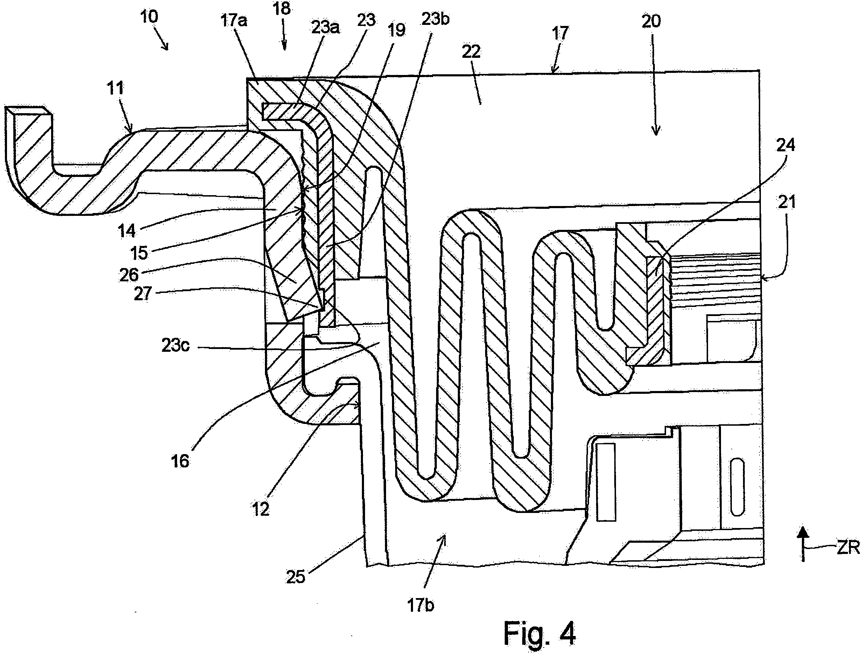

In Fig. 3 ist eine schematische perspektivische Schnittansicht einer erfindungsgemäßen Scheibenbremse mit einer Dichtungseinrichtung 10 dargestellt, und Fig. 4 zeigt eine vergrößerte Darstellung des Bereichs IV aus Fig. 3.

Ein Druckstück 4 ist in Fig. 3 nur gestrichelt angedeutet. Weiterhin ist an der Unterseite des Faltenbalgs 17 zum Innenraum 8 hin ein Deckel 25 angeordnet.

Die Dichtungseinrichtung 10 umfasst eine Halterung für den Faltenbalg 17, welche hier aus dem Bodenblech 11 mit der Aufnahme 16, die von der zylindrischen Aufnahmewand 14 umgeben ist, gebildet ist, und den Faltenbalg 17 mit seinem Körper 22 mit dem äußeren Dichtabschnitt 19, dem äußeren Versteifungsring 23, den Falten 17b, den inneren Versteifungsring 24 und den inneren Dicht- und Halteabschnitt 21.

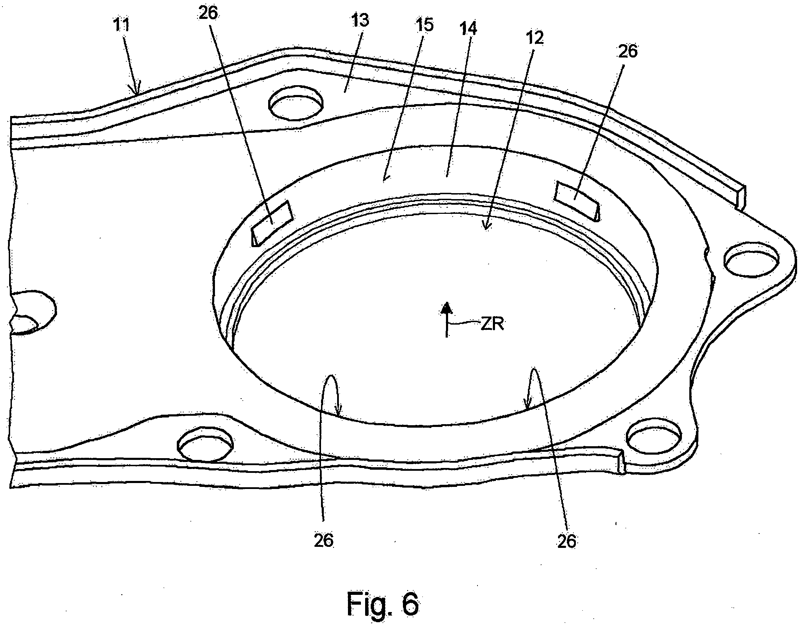

Im Gegensatz zum Stand der Technik nach Fig. 1 und 2 ist die Zylinderwand 23b des äußeren Versteifungsrings 23 nur mit dem oberen Rand 23a versehen, wobei an ihrem unteren Ende kein weiterer Rand vorhanden ist. Außerdem liegt der zum Innenraum 8 weisende Abschnitt der Zylinderwand 23b und ist nicht vom Material des Körpers 22 des Faltenbalgs 17 umgeben. Dieser freiliegende zylindrische Abschnitt der Zylinderwand 23b ist an seiner Außenseite mit einer umlaufenden Nut 23c versehen, die hier ein Rechteckprofil aufweist. In diese Nut 23c greifen mehrere Vorsprünge 26 (siehe auch Fig. 6) mit Kanten 27 ein. Die Vorsprünge 26 sind an der Innenseite der Aufnahmewand 14 des Bodenblechs 11 in die Aufnahme 16 hervorstehend angebracht und auf deren Umfang verteilt, wie weiter unten noch näher erläutert wird. Das Bodenblech 11 ist mit dem Befestigungsabschnitt 13 fest mit dem Bremssattel 7 verbunden. Somit sind die Vorsprünge mit dem Bremssattel 7 indirekt über das Bodenblech 11 verbunden.

In dem dargestellten Ausführungsbeispiel in Fig. 3 und 4 sind die Vorsprünge 26 als Sicken durch einen Stanzbiegevorgang aus dem Material der Aufnahmewand 14 des Bodenblechs 11 hergestellt. Ein zum Außenraum 9 weisender oberer Abschnitt der Aufnahmewand 14 gerade und parallel zur Zuspannrichtung ZR verläuft und an seiner Innenseite in der Aufnahme 16 den Dichtabschnitt 15 bildet, welcher mit dem äußeren Dichtabschnitt 19 des Faltenbalgs 17 wie im Stand der Technik in abdichtender Zusammenwirkung steht. Unterhalb dieses Abschnitts der Aufnahmewarid 14 ist ein Abschnitt der Aufnahmewand 14 als Sicke als Vorsprung 26 in die Aufnahme 16 hinein gebogen, z.B. in einem Winkel im Bereich von 5...30°, wobei die Kante 27 gebildet ist, welche in die Aufnahme hervorsteht. Hier ist die Unterseite des Vorsprungs 26 vom Material der Aufnahmewand durch einen Stanzbiegevorgang getrennt. Die Kante 27 steht mit der Nut 23c des äußeren Versteifungsrings 23 des Faltenbalgs 17 dergestalt in Eingriff, dass sie eine untere Innenwand der Nut 23c kontaktiert und einen axialen (in Zuspannrichtung ZR) Anschlag und somit eine axiale Festlegung des Faltenbalgs 17 entgegen seiner Einbaurichtung, die in entgegengesetzter Zuspannrichtung ZR verläuft, bildet. Die Innenfläche des Vorsprungs 26 oberhalb der Kante 27 verläuft schräg von oben nach unten, z. B. in einem Winkel im Bereich von 5...30°. Beim Einsetzen des Faltenbalgs 17 gleitet der Rand des freiliegenden Abschnitts mit der Nut des äußeren Versteifungsring 23 über die Vorsprünge 26 (siehe auch Fig. 6), bis die Kanten 27 in die Nut 23c einrasten und mit dieser in Eingriff stehen. Das Material des Körpers 22 des Faltenbalgs 17, insbesondere des äußeren Dichtabschnitts 19 kommt mit den Vorsprüngen 26 nicht in Berührung und kann durch diese auch nicht gequetscht werden. Somit wird keine Rückstellkraft erzeugt und ein Herauswandern des Faltenbalgs 17 aus der Aufnahme 16 des Bodenblechs 11 kann nicht bewirkt werden.

Die mit der Nut 23c in Eingriff stehenden Vorsprünge 26 bewirken durch diesen Formschluss eine verbesserte Sitzfestigkeit des Faltenbalgs 17 in der Aufnahme 16 des Bodenblechs 11, wobei das Bodenblech 11 und der äußere Versteifungsring 23 aus einem Metall sind, wodurch eine große Festigkeit erzielt wird. Die Dichtwirkung in dem äußeren Übergangsabschnitt 18 zwischen Faltenbalg 17 und Bodenblech 11 wird weiterhin durch den Dichtabschnitt 15 der Aufnahmewand 14 des Bodenblechs 11 und den damit in Kontakt stehenden äußeren Dichtabschnitt 19 des Faltenbalgs 17 erzeugt. Eine axiale Festlegung des Faltenbalgs 17 wird mittels der Vorsprünge 26 und der Nut 23c des Faltenbalgs 17 ermöglicht.

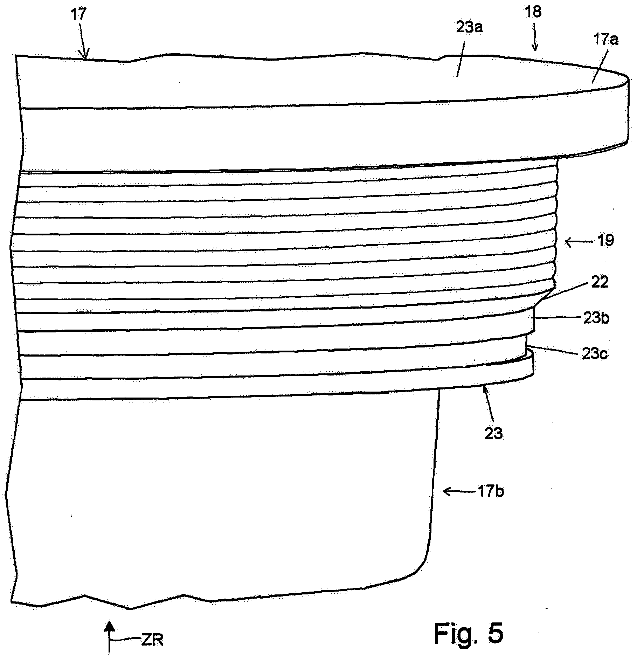

Fig. 5 illustriert eine Teilansicht des Faltenbalgs 17 der Dichtungseinrichtung 10 nach Fig. 3 und 4.

Der Faltenbalg 17 ist aus einem elastischen Material, z.B. Gummi, welches um den inneren Versteifungsring 24 aus Metall und den äußeren Versteifungsring 23 aus Metall herum aufgebracht ist, z.B. als Spritzgussteil. Der äußere Dichtabschnitt 19 weist hier Riffel bzw. eine gewellte Oberfläche auf, um eine bessere Dichtwirkung in Zusammenwirkung mit dem Dichtabschnitt 15 des Bodenblechs 11 zu erzielen. Der äußere Dichtabschnitt 19 weist an seiner Unterseite im Übergang zu dem freiliegenden Abschnitt der Zylinderwand 23b mit der Nut 23c eine umlaufende Schräge 22a auf, welche einen Freiraum für den Vorsprung 26 ermöglicht, wie in Fig. 4 zu erkennen ist. Die Nut 23c kann in den äußeren Verstärkungsring 23 bei dessen Herstellvorgang, der z. B. ein Stanzbiegevorgang ist, ausgeführt werden.

Eine perspektivische Teildraufsicht des Bodenblechs 11 der Dichtungseinrichtung 10 nach Fig. 3 und 4 ist in Fig. 6 dargestellt.

Das Bodenblech 11 ist zum Beispiel als ein Stanzbiegeteil aus Metall hergestellt. Gezeigt ist hier der Bereich mit Befestigungsabschnitten 13 und der Öffnung 12. Das Bodenblech 11 kann eine oder mehrere Öffnungen 12 je nach Ausbildung der zugehörigen Scheibenbremse aufweisen. Die gezeigte Oberseite weist in eingebauter Stellung zum Außenraum 9, die darunter liegende Unterseite zum Innenraum 8. Die Öffnung 12 ist innerhalb der Aufnahme 16 angeordnet. Die Aufnahme 16 weist die umlaufende Aufnahmewand 14 mit dem Dichtabschnitt 15 auf. An der Aufnahmewand 14 innerhalb der Aufnahme 16 sind in regelmäßigem Winkelabstand vier Sicken als Vorsprünge 26 verteilt angeordnet. Der Winkelabstand beträgt dabei 90°. Es sind selbstverständlich auch mehr Vorsprünge 26 möglich. Die Länge eines Vorsprungs 26 beträgt in diesem Beispiel ca. 9 mm, andere Abmessungen sind natürlich möglich. Die Schrägen der Vorsprünge 26 weisen nach oben und ihre Kanten 27 sind zum Innenraum 8 hin angeordnet. Die Vorsprünge 26 können bei dem Herstellvorgang des Bodenblechs 11 hergestellt oder auch nachträglich angebracht werden.

Die Erfindung ist nicht auf die oben beschriebenen Ausführungsbeispiele beschränkt. Sie ist im Rahmen der beigefügten Ansprüche modifizierbar.

So kann je nach Anzahl von Druckstücken 4 der Scheibenbremse eine entsprechende Anzahl von Faltenbälgen 17 zu der Dichtungseinrichtung 10 gehören.

Es ist denkbar, dass die Vorsprünge 26 nach Herstellung des Bodenblechs 11 eingestanzt werden. Sie können auch als Zusatzteile nachträglich in dafür vorgesehene Aussparungen in der Aufnahmewand 14 eingesetzt und befestigt werden (Löten, Schweißen, Kleben) oder auf einem Ring angeordnet sein, der von außen auf die Aufnahmewand 14 in Art eines Wellensicherungsrings aufgebracht wird, wobei die Vorsprünge 26 dann durch dafür vorgesehene Aussparungen in der Aufnahmewand 14 in die Aufnahme 16 hineinragen.

Ferner ist es auch vorstellbar, dass ein Bremssattel 7 ohne Bodenblech 11 die Aufnahme 16 mit den Vorsprüngen 26 aufweist. Diese Vorsprünge 26 sind dann direkt mit dem Bremssattel 7 verbunden.

### Bezugszeichenliste

- 1: Bremsscheibe
- 2: Bremsbelag
- 3: Bremsbelagträger
- 4: Druckstück
- 5: Anschlussabschnitt
- 6: Gewinderohreinheit
- 7: Bremssattel
- 8: Innenraum
- 9: Außenraum
- 10: Dichtungseinrichtung
- 11: Bodenblech
- 12: Öffnung
- 13: Befestigungsabschnitt
- 14: Aufnahmewand
- 15: Dichtabschnitt
- 16: Aufnahme
- 17: Faltenbalg
- 17a: Faltenbalgrand
- 17b: Falten
- 18: Äußerer Übergangsabschnitt
- 19: Äußerer Dichtabschnitt
- 20: Innerer Übergangsabschnitt
- 21: Innerer Dicht- und Halteabschnitt
- 22: Körper
- 22a: Schräge
- 23: Äußerer Versteifungsring
- 23a: Rand
- 23b: Zylinderwand
- 23c: Nut
- 24: Innerer Versteifungsring
- 25: Deckel
- 26: Vorsprung
- 27: Kante
- ZR: Zuspannrichtung

## Patentansprüche

1. Scheibenbremse mit einer Dichtungseinrichtung (10), mit einem Bremssattel (7), welcher eine Bremsscheibe (1) übergreift und in dem zwei Bremsbeläge (2) zur Zusammenwirkung mit der Bremsscheibe (1) bei Beaufschlagung mit einer Bremskraft durch eine Zuspanneinrichtung über mindestens ein mit einer Gewinderohreinheit (6) verbundenes Druckstück (4) angeordnet sind, wobei die Dichtungseinrichtung (10) mindestens einen Faltenbalg (17) aufweist, welcher mit dem Druckstück (4) verbunden und an dem Bremssattel (7) axial festgelegt ist,
**dadurch gekennzeichnet, dass**
der Faltenbalg (17) einen äußeren Versteifungsring (23) mit einer außen umlaufenden Nut (23c) aufweist, welche mit Vorsprüngen (26), die mit dem Bremssattel (7) direkt oder indirekt verbunden sind, in Eingriff steht.

2. Scheibenbremse nach Anspruch 1, **dadurch gekennzeichnet, dass** die Dichtungseinrichtung (10) weiterhin ein Bodenblech (11) umfasst, welches an dem Bremssattel (7) befestigt ist und die Vorsprünge (26) aufweist.

3. Scheibenbremse nach Anspruch 2, **dadurch gekennzeichnet, dass** das Bodenblech (11) eine Aufnahme (16) mit einer Aufnahmewand (14) umfasst, wobei die Aufnahmewand (14) an ihrer zur Aufnahme (16) weisenden Innenseite die Vorsprünge (26) aufweist.

4. Scheibenbremse nach Anspruch 3, **dadurch gekennzeichnet, dass** die Vorsprünge (26) als Sicken der Aufnahmewand (14) mit Kanten (27) ausgebildet sind, die in die Aufnahme (16) hineinragen, wobei die Kanten (27) mit der Nut (23c) des Faltenbalgs (17) in Eingriff stehen.

5. Scheibenbremse nach Anspruch 3, **dadurch gekennzeichnet, dass** die Vorsprünge (26) als separate Teile an der zur Aufnahme (16) weisenden Innenseite der Aufnahmewand (14) oder an der Aufnahmewand (14) durch Ausnehmungen der Aufnahmewand (14) hindurchragend angebracht und mit Kanten (27) ausgebildet sind, die in die Aufnahme (16) hineinragen, wobei die Kanten (27) mit der Nut (23c) des Faltenbalgs (17) in Eingriff stehen.

6. Scheibenbremse nach einem der Ansprüche 3 bis 5, **dadurch gekennzeichnet, dass** mindestens zwei, vorzugsweise vier, Vorsprünge (26) an der Aufnahmewand (14) angeordnet sind.

7. Scheibenbremse nach Anspruch 6, **dadurch gekennzeichnet, dass** jeder der Vorsprünge (26) eine Länge von ungefähr 9 mm aufweist.

8. Scheibenbremse nach einem der vorhergehenden Ansprüche, **dadurch gekennzeichnet, dass** die Vorsprünge (26) in einer Einsetzrichtung des Faltenbalgs (17) in einem Winkel angeschrägt sind, vorzugsweise ein Winkel im Bereich von 5...30°.

9. Scheibenbremse nach einem der Ansprüche 3 bis 8, **dadurch gekennzeichnet, dass** die Aufnahmewand (14) oberhalb der Vorsprünge (26) zur Bremsscheibe (1) weisend einen Dichtabschnitt (15) zur Zusammenwirkung mit einem äußeren Dichtabschnitt (19) des Faltenbalgs (17) aufweist.

10. Scheibenbremse nach einem der vorhergehenden Ansprüche, **dadurch gekennzeichnet, dass** der Abschnitt des äußeren Versteifungsring (23) mit der umlaufenden Nut (23c) freiliegend angeordnet ist.

11. Scheibenbremse nach einem der vorhergehenden Ansprüche, **dadurch gekennzeichnet, dass** die umlaufende Nut (23c) einen rechteckigen Querschnitt aufweist.

## Claims

1. Disc brake with a sealing device (10), the disc brake comprising a brake calliper (7), which encompasses a brake disc (1) and in which are located two brake pads (2) for acting together with the brake disc (1) if a braking force is applied by an application device via at least one pressure pad (4) connected to a threaded pipe unit (6), wherein the sealing device (10) comprises at least one bellows (17), which is connected to the pressure pad (4) and axially located on the brake calliper (7),
**characterised in that**
the bellows (17) has an outer reinforcing ring (23) with an external groove (23c), which is in engagement with projections (26) directly or indirectly connected to the brake calliper (7).

2. Disc brake according to claim 1, **characterised in that** the sealing device (10) further comprises a base plate (11), which is secured to the brake calliper (7) and features the projections (26).

3. Disc brake according to claim 2, **characterised in that** the base plate (11) comprises a receptacle (16) with a receptacle wall (14), the receptacle wall (14) featuring the projections (26) on the side facing the receptacle (16).

4. Disc brake according to claim 3, **characterised in that** the projections (26) are designed as beads of the receptacle wall (14) with edges (27), the edges (27) being in engagement with the groove (23c) of the bellows (17).

5. Disc brake according to claim 3, **characterised in that** the projections (26) are mounted as separate parts on the inside of the receptacle wall (14) facing the receptacle (16) or on the receptacle wall (14) while projecting through the receptacle wall (14), and **in that** they are provided with edges (27) projecting into the receptacle (16), the edges (27) being in engagement with the groove (23c) of the bellows (17).

6. Disc brake according to any of claims 3 to 5, **characterised in that** at least two and preferably four projections (26) are provided on the receptacle wall (14).

7. Disc brake according to claim 6, **characterised in that** each of the projections (26) has a length of approximately 9 mm.

8. Disc brake according to any of the preceding claims, **characterised in that** the projections (26) are chamfered in an installation direction of the bellows (17) at an angle, preferably in the range of 5 to 30 degrees.

9. Disc brake according to any of claims 3 to 8, **characterised in that** the receptacle wall (14) comprises above the projections (26), pointing towards the brake disc (1), a sealing section (15) intended for acting together with an outer sealing section (19) of the bellows (17).

10. Disc brake according to any of the preceding claims, **characterised in that** the section of the outer reinforcing ring (23) with the continuous groove (23c) is arranged to be exposed.

11. Disc brake according to any of the preceding claims, **characterised in that** the continuous groove (23c) has a rectangular cross-section.

## Revendications

1. Frein à disque muni d'un moyen d'étanchéité, comprenant un étrier de frein (7), qui chevauche un disque de frein (1) et dans lequel deux garniture de frein (2) sont disposées pour l'interaction avec ladite disque de frein (1), quand elles sont soumises à une force de freinage moyennant un moyen de serrage de frein via au moins un élément presseur (4) connecté à une unité à tube fileté (6), dans lequel ledit moyen d'étanchéité (10) comprend au moins un soufflet (17), qui est connecté audit élément presseur (4) et axialement fixé audit étrier de frein (7),
**caractérisé en ce**
**que** ledit soufflet (17) comprend un anneau raidisseur (23) extérieur à une rainure périphérique extérieure (23c), qui se trouve en prise dans des saillies (26) directement ou indirectement connecté audit étrier de frein (7).

2. Frein à disque selon la revendication 1, **caractérisé en ce que** ledit moyen d'étanchéité (10) comprend, au plus, une tôle de fond (11), qui est fixée audit étrier de frein (7) et qui est munie des saillies.

3. Frein à disque selon la revendication 2, **caractérisé en ce que** ladite tôle de fond (11) comprend un élément récepteur (16) à une paroi réceptrice (14), à ladite paroi réceptrice (14) étant munie desdites saillies (26) de son côté intérieur en face dudit élément récepteur (16).

4. Frein à disque selon la revendication 3, **caractérisé en ce que** lesdites saillies (26) sont configurés sous forme de moulures de ladite paroi réceptrice (14), ayant des bords (27) qui font saillie dans ledit élément récepteur (16), auxdits bords (27) se trouvant en prise dans ladite rainure (23c) dudit soufflet (17).

5. Frein à disque selon la revendication 3, **caractérisé en ce que** lesdites saillies (26) sont attachées en tant que parties séparées audit côté intérieur de ladite paroi réceptrice (14), qui se trouve en face dudit élément récepteur (16) ou sont fixées à ladite paroi réceptrice (14), en s'étendant à travers des évidements de ladite paroi réceptrice, aux bords (27) étant formés auxdites saillies, qui font saillie dans ledit élément récepteur (16), et auxdits bords (27) se trouvant en prise dans ladite rainure (23c) dudit soufflet (17).

6. Frein à disque selon une quelconque des revendications 3 à 5, **caractérisé en ce qu'**au moins deux, de préférence quatre, saillies (26) sont disposées à ladite paroi réceptrice (14).

7. Frein à disque selon la revendication 6, **caractérisé en ce que** chacune desdites saillies (26) présente une longueur de 9 mm environ.

8. Frein à disque selon une quelconque des revendications précédentes, **caractérisé en ce que** lesdites saillies (26) sont biseautées à un angle, de préférence un angle dans la gamme de 5 à 30°, dans un dispositif d'insertion dudit soufflet (17).

9. Frein à disque selon une quelconque des revendications 3 à 8, **caractérisé en ce que** ladite paroi réceptrice (14) comprend une partie d'étanchéité (15) au-dessus desdites saillies (26), s'étendant en direction vers le disque de frein, pour l'interaction avec une partie d'étanchéité extérieure (19) dudit soufflet (17).

10. Frein à disque selon une quelconque des revendications précédentes, **caractérisé en ce que** le segment dudit anneau raidisseur (23) extérieur avec ladite rainure périphérique (23c) est disposé de façon exposée.

11. Frein à disque selon une quelconque des revendications précédentes, **caractérisé en ce que** ladite rainure périphérique (23c) présente une section transversale rectangulaire.
